**Europäisches Patentamt**

**European Patent Office**

**Office européen des brevets**

(19)

(11) Veröffentlichungsnummer: **0 081 224**
**A2**

(12) **EUROPÄISCHE PATENTANMELDUNG**

(21) Anmeldenummer: **82111269.5**

(22) Anmeldetag: **06.12.82**

(51) Int. Cl.³: **G 11 C 9/06**

(30) Priorität: **09.12.81 DE 3148761**

(43) Veröffentlichungstag der Anmeldung:
**15.06.83 Patentblatt 83/24**

(84) Benannte Vertragsstaaten:
**CH FR GB IT LI SE**

(71) Anmelder: **SIEMENS AKTIENGESELLSCHAFT**
**Berlin und München Wittelsbacherplatz 2**
**D-8000 München 2(DE)**

(72) Erfinder: **Füchsle, Willy, Ing. grad.**
**Albrecht-Dürer-Strasse 70**
**D-8037 Olching(DE)**

(54) Schaltungsanordnung zum Adressieren unterschiedlicher Speichereinheiten in einem Mikrorechnersystem.

(57) Zum Verändern der Adressenbereiche von Speichereinheiten (S1 bis S3) in einem Mikrorechnersystem ist ein Decodierer (DC) vorgesehen, dem einerseits die höchstwertigen Bits der Adressen und andererseits in einem Ausgabebaustein (P) des Mikrorechners (MP) erzeugte Steuersignale (ST) zugeführt werden und der Auswahlsignale (AS) an die den Speichereinheiten (S1 bis S3) vorgeschalteten Bustreiber (BT1 bis BT3) abgibt. Die Adressen werden allen Speichereinheiten (S1 bis S3) gleichzeitig zugeführt, jedoch werden jeweils nur die einer Speichereinheit zugeordneten Bustreiber (BT1 bis BT3) freigegeben.

FIG 2

EP 0 081 224 A2

Croydon Printing Company Ltd

0081224

SIEMENS AKTIENGESELLSCHAFT      Unser Zeichen:
Berlin und München             VPA

                               81 P 5 6 0 1 E

Schaltungsanordnung zum Adressieren unterschiedlicher Speichereinheiten in einem
Mikrorechnersystem.
------------------------------------------------

Die Erfindung bezieht sich auf eine Schaltungsanordnung
zum Adressieren unterschiedlicher Speichereinheiten in
einem Mikrorechnersystem entsprechend dem Oberbegriff
des Patentanspruchs 1.

Ein an einem Mikrorechnersystem angeschlossener Gesamtspeicher kann aus mehreren Speichereinheiten bestehen.
Derartige Speichereinheiten sind beispielsweise ein
Festwertspeicher (ROM) für den Programmcode, ein
elektrisch änderbarer Festwertspeicher für veränderbare Gerätedaten (EAROM) und ein Schreib-Lese-Speicher
(RAM) für die Speicherung von Daten. Der Mikroprozessor
des Mikrorechnersystems ist über einen Datenbus, einen
Adressbus und einen Steuerbus mit den Speichereinheiten
verbunden.

Für die Bildung von Systemvarianten ist es oft notwendig,
die Adressenbereiche der Speichereinheiten verändern zu
können, weil z.B. für neue Gerätefunktionen mehr Programmcode notwendig ist. Dies kann z.B. bei einem konstanten
Adressenbereich für den Gesamtspeicher durch eine Vergrößerung des Adressenbereichs des Festwertspeichers,
einer Verschiebung des Adressenbereichs des elektrisch
änderbaren Speichers und eine Verkleinerung des Adressen-

Ret 1 Wt / 3.12.81

bereichs des Schreib-Lese-Speichers erfolgen. In diesem Fall sind jedoch für jede Systemvariante spezielle Speicherbaugruppen erforderlich.

Falls die jeweils gleichen Speicherbaugruppen verwendet werden, wäre es denkbar, an den Adressbus einen Decodierer anzuschließen, der in Abhängigkeit von der jeweils gewünschten Systemvariante Freigabesignale an die einzelnen Speichereinheiten abgibt. In diesem Fall müßte für jede Systemvariante der Decodierer ausgetauscht werden und außerdem müßten zusätzliche Leitungen zu den einzelnen Speichereinheiten geführt werden, um diese jeweils freizugeben. Dies erfordert jedoch einen verhältnismäßig großen Aufwand, da dann das Zentralsystem, das den Mikroprozessor, den Decodierer und Bustreiber enthält, infolge der unterschiedlichen Decodierer unterschiedlich ausgebildet sein müßte und außer den Bussen noch weitere Leitungen zu den Speichern geführt werden müßten. Letzteres ist insbesondere dann von Nachteil, wenn die Speichereinheiten nicht auf der gleichen Baugruppe wie das Zentralsystem untergebracht sind. Außerdem ist eine programmgesteuerte Umschaltung zwischen den Systemvarianten nicht ohne weiteres möglich. Der Erfindung liegt damit die Aufgabe zugrunde, eine Schaltungsanordnung anzugeben, mittels der auf einfache Weise programmgesteuert die Adressenbereiche der Speichereinheiten verändert und damit unterschiedliche Systemvarianten eingestellt werden können.

Erfindungsgemäß wird die Aufgabe bei der Schaltungsanordnung der eingangs genannten Art durch die im kennzeichnenden Teil des Patentanspruchs 1 angegebenen Merkmale gelöst.

Die Schaltungsanordnung gemäß der Erfindung hat den Vorteil, daß die verschiedenen Systemvarianten mit geringem
Aufwand einstellbar sind, und daß insbesondere für alle
Systemvarianten die gleichen Baugruppen des Zentralsystems
verwendet werden können. Der Aufwand für den Decodierer
hängt davon ab, in welchem Verhältnis der Adressenbereich
der kleinsten Speichereinheit zum Adressenbereich des
Gesamtspeichers steht. Die Anzahl der höchstwertigsten
Bits der Adressen, die dem Decodierer zugeführt werden
müssen, ergibt sich unmittelbar aus der Differenz der
für die Adressierung des Gesamtspeicherbereichs und der
für die kleinste Speichereinheit erforderlichen Anzahl von
Bits. Der Decodierer ist vorzugsweise als Festwertspeicher
ausgebildet. Die Verwendung der Schaltungsanordnung erweist sich insbesondere dann als zweckmäßig, wenn als
Speichereinheiten ein Festwertspeicher, ein elektrisch
änderbarer Festwertspeicher und/oder ein Schreib-Lese-
Speicher vorgesehen sind.


Im folgenden wird ein Ausführungsbeispiel der Schaltungsanordnung gemäß der Erfindung anhand von Zeichnungen
näher erläutert.


Es zeigen
Fig. 1  eine Darstellung von möglichen Speichervarianten
und
Fig. 2  ein Blockschaltbild der Schaltungsanordnung.


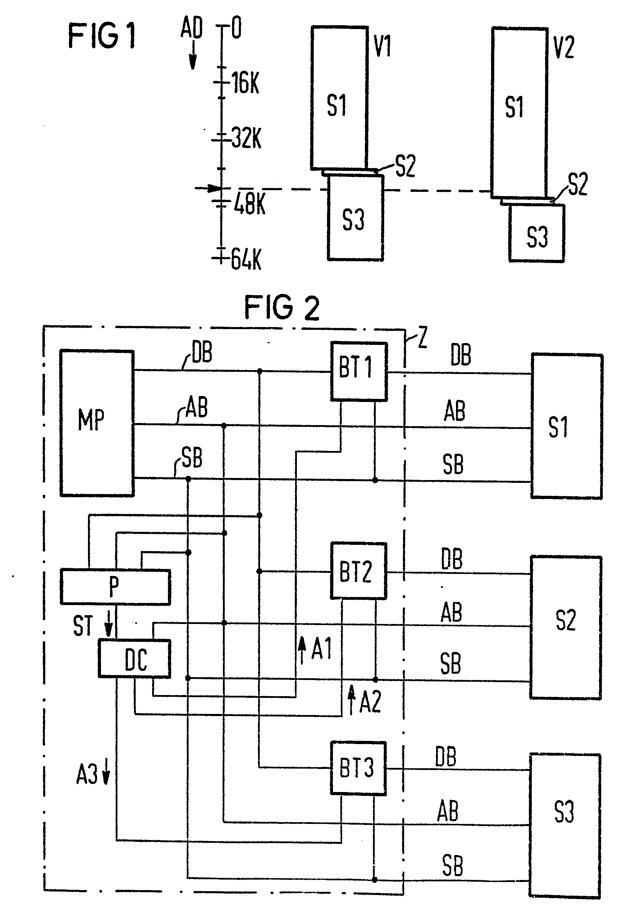

Bei der Darstellung in Fig.1 wird angenommen, daß an dem
Mikrorechnersystem drei Speichereinheiten S1 bis S3 angeschlossen sind, die für den Mikroprozessor einen Adressenbereich von 64 K bilden. Die Speichereinheit S1 ist beispielsweise als Festwertspeicher ausgebildet und hat einen
Speicherbereich von 47 K. Die Speichereinheit S2 ist als
elektrisch änderbarer Festwertspeicher ausgebildet und hat einen Adressenbereich von 1 K. Die Speichereinheit S3 schließlich ist als Schreib-Lese-Speicher ausgebildet und hat einen Adressenbereich von 23 K.

Für eine erste Systemvariante V1 wird angenommen, daß der Adressenbereich der Speichereinheit S1 bei der Adresse AD = 0, der Adressenbereich des der Speichereinheit S2 bei der Adresse AD = 40 K und der Adressenbereich der Speichereinheit S3 bei der Adresse AD = 41 K beginnt. Für eine zweite Systemvariante V2 wird angenommen, daß der Adressenbereich der Speichereinheit S1 ebenfalls bei der Adresse AD = 0 beginnt, der Adressenbereich der Speichereinheit S2 jedoch bei der Adresse AD = 47 K und der Adressenbereich der Speichereinheit S3 bei der Adresse AD = 48 K beginnt.

Wenn die Systemvarianten V1 und V2, gesteuert durch das dem Mikrorechner zugeordnete Programm, beliebig umschaltbar sein sollen, müssen die Speichereinheiten S1 bis S3 die angegebenen Adressenbereiche aufweisen. Falls jedoch für ein bestimmtes Gerät das Programm nicht beliebig änderbar ist und in einem Festwertspeicher gespeichert ist und damit festliegt, welche Systemvariante oder welche Systemvarianten eingestellt werden könnten, müssen die entsprechenden Speicherbaugruppen selbstverständlich nur so weit mit Speicherbausteinen bestückt werden, wie es für die entsprechenden Systemvarianten erforderlich ist. Wird nun der Gesamtspeicher beispielsweise durch einen bei der durch einen Pfeil gekennzeichneten Stelle AD = 45 K adressiert, so werden sowohl in der Speichereinheit S1 als auch in der Speichereinheit S3 entsprechende Speicherbereiche adressiert. Zum Unterscheiden der beiden Systemvarianten V1 und V2 ist bei der Schaltungsanordnung ein entsprechender Decodierer vorgesehen, dem einerseits die höchstwertigen Adressbits der Adresse AD und dem andererseits Steuersignale zugeführt werden, die von einem am Mikroprozessor angeschlossenen Ausgabebaustein abgegebenwerden und die die
entsprechende Systemvariante festlegen. Der Decodierer
gibt Auswahlsignale ab, die die Daten auf nur jeweils
einem den Speichereinheiten S1 bis S3 zugeordneten Datenbus freigeben.

Bei der in Fig.2 dargestellten Schaltungsanordnung ist
ein Zentralsystem Z vorgesehen, das einen Mikroprozessor
MP enthält, der in bekannter Weise mit einem Datenbus DB,
einem Adressbus AB und einem Steuerbus SB versehen ist.
An dem Zentralsystem sind die drei Speichereinheiten S1
bis S3 jeweils über den Datenbus DB, den Adressbus AB
und den Steuerbus SB angeschlossen. Die Speichereinheiten S1 bis S3 sind beispielsweise aus integrierten
Speicherbausteinen aufgebaut, die unter der Bezeichnung
2732, ER 3400 bzw. MK 4104 im Handel erhältlich sind.

An den Mikroprozessor MP ist in bekannter Weise ein
Ausgabebaustein (Port-Baustein) P angeschlossen der
unter der Bezeichnung 8255 A im Handel erhältlich ist.
Diesem Ausgabe-Baustein P ist der Decodierer DC nachgeschaltet, der eingangsseitig zusätzlich mit dem Adressbus AB und dem Steuerbus SB verbunden ist, erzeugt
Auswahlsignale A1 bis A3, die der Auswahl der entsprechenden Speichereinheit S1 bis S3 dienen und die
den bidirektionalen Bustreibern BT1 bis BT3 zugeführt
werden, die jeweils im Verbindungsweg zwischen dem
Mikroprozessor MP und einer der Speichereinheiten S1
bis S3 angeordnet sind. Der Decodierer DC ist vorzugsweise als Festwertspeicher, beispielsweise als programmierbarer Festwertspeicher, ausgebildet.

Zum Einstellen der Systemvariante V1 liest der Mikroprozessor MP aus der Speichereinheit S1 in bekannter Weise entsprechende Befehle aus, um den Ausgabebaustein P entsprechend anzusteuern, so daß die von ihm abgegebenen Steuersignale ST der Systemvariante V1 zugeordnete Binärwerte annehmen. Wenn, entsprechend Fig.1, der Mikroprozessor MP auf den Adressbus AB die Adresse AD = 45 K gibt, wird diese Adresse allen Speichereinheiten S1 bis S3 zugeführt. Über den Steuerbus SB werden, beispielsweise zur Durchführung eines Lesevorgangs, entsprechende Steuersignale abgegeben. Aus allen Steuereinheiten S1 bis S3 werden nun die entsprechenden Daten ausgelesen und auf den Datenbus DB gegeben. Die Daten werden jedoch nur von dem Bustreiber BT3 freigegeben und zum Mikroprozessor MP durchgeschaltet. Die Freigabe erfolgt durch das vom Decodierer DC abgegebene Auswahlsignal A3, das in Abhängigkeit von den höchstwertigen Bits der Adresse AD und den Binärwerten der Steuersignale ST erzeugt wird.

In entsprechender Weise wird, wenn über den Ausgabebaustein P die Systemvariante V2 eingestellt wurde, vom Decodierer DC ein Auswahlsignal A1 an den Bustreiber BT1 abgegeben und nur die von der Speichereinheit S1 abgegebenen Daten werden über den Datenbus DB zum Mikroprozessor MP durchgeschaltet. Die übrigen Bustreiber BT2 und BT3 sind dann gesperrt.

Die Anzahl der höchstwertigen Bits der Adresse AD, die dem Decodierer DC zugeführt werden, hängt von dem Verhältnis des Adressenbereichs der kleinsten Speichereinheit zum Adressenbereich des Gesamtspeichers ab. Wenn, wie bei dem in Fig.1 dargestellten Beispiel, die Speichereinheit S2 nur einen Adressenbereich von 1 K aufweist, und der Adressenbereich des Gesamtspeichers 64 K beträgt, sind 64 derartige kleinste Speichereinheiten adressierbar, so daß dem Decodierer DC die Adressbits 10 bis 15,
also 6 Adressbits,zugeführt werden müssen.

Falls in einer der Speichereinheiten S1 bis S3 Daten
eingeschrieben werden sollen, erfolgt das Durchschalten
der Daten zu den Speichereinheiten S1 bis S3 ebenfalls
in Abhängigkeit von den Auswahlsignalen A1 bis A3. Falls
die Speichereinheit S1 jedoch als Festwertspeicher ausgebildet ist, ist es selbstverständlich nicht möglich, in
diesem Speicher Daten über den Datenbus DB einzuschreiben.
Falls mehrere Speichereinheiten die gleichen Adressen
aufweisen, kann der Decodierer DC auch die Funktion
übernehmen, die Speicherinhalte von nicht ausgewählten
Speichereinheiten vor einem schreibenden Zugriff zu
schützen, indem er beispielsweise auf dem Steuerbus SB
entsprechende Signale erzeugt.

4 Patentansprüche
2 Figuren

Patentansprüche:

1. Schaltungsanordnung zum Adressieren unterschiedlicher Speichereinheiten in einem Mikrorechnersystem, bei der die Speichereinheiten über einen Datenbus, einen Adressbus und einen Steuerbus an einem Zentralsystem angeschlossen sind,

d a d u r c h   g e k e n n z e i c h n e t, daß ein Decodierer (DC) vorgesehen ist, der eingangsseitig mit dem Adressbus (AB) und mit den Ausgängen eines am Mikroprozessor (MP) angeschlossenen Ausgabebausteins (P) verbunden ist, und der in Abhängigkeit von vom Ausgabebaustein (P) abgegebenen Steuersignalen (ST) und von den höchstwertigen Bits der am Adressenbus (AB) jeweils anliegenden Adresse (AD) den Speichereinheiten (S1 bis S3) vorgeschaltete Bustreiber (BT1 bis BT3) freigibt oder sperrt.

2. Schaltungsanordnung nach Anspruch 1, dadurch gekennzeichnet, daß die Anzahl der höchstwertigen Bits der Adresse (AD) die dem Decodierer (DC) zugeführt wird, gleich ist der Anzahl der Bits, die sich aus der Differenz der für die Adressierung des Gesamtspeicherbereichs (S1 bis S3) und der für die kleinste Speichereinheit (S2) erforderlichen Anzahl von Bits ergeben.

3. Schaltungsanordnung nach Anspruch 1 oder 2, dadurch gekennzeichnet, daß als Decodierer (DC) ein Festwertspeicher vorgesehen ist.

4. Schaltungsanordnung nach einem der Ansprüche 1 bis 3, dadurch gekennzeichnet, daß als Speichereinheiten (S1 bis S3) ein Festwertspeicher, ein elektrisch änderbarer Festwertspeicher und ein Schreib-Lese-Speicher vorgesehen sind.

1/1

**FIG 1**

**FIG 2**